# Europäisches Patentamt

# European Patent Office

# Office européen des brevets

(11) Veröffentlichungsnummer: **0 121 870**
**A1**

(12) ## EUROPÄISCHE PATENTANMELDUNG

(21) Anmeldenummer: **84103480.4**

(51) Int. Cl.³: **B 23 K 9/00**

(22) Anmeldetag: **29.03.84**

(30) Priorität: **08.04.83 DD 249695**

(71) Anmelder: **VEB Kombinat Metallaufbereitung, Herzbergstrasse 35-39, DDR-1130 Berlin (DD)**

(72) Erfinder: **Hartung, Fritz, Dr.-Ing., Am Seeufer 8, DDR-3034 Magdeburg (DD)**
Erfinder: **Töter, Manfred, Grimm-Privatweg 1, DDR-3080 Magdeburg (DD)**
Erfinder: **Angrabeit, Hans-Jürgen, Dr.-Ing., Friesenstrasse 44, DDR-3080 Magdeburg (DD)**

(43) Veröffentlichungstag der Anmeldung: **17.10.84 Patentblatt 84/42**

(74) Vertreter: **Patentanwälte Beetz sen. - Beetz jun. Timpe - Siegfried - Schmitt-Fumian, Steinsdorfstrasse 10, D-8000 München 22 (DE)**

(84) Benannte Vertragsstaaten: **AT CH DE LI NL**

(54) **Verfahren und Vorrichtung zum thermischen Trennen metallischer Werkstoffe.**

(57) Die Erfindung soll sowohl für den mobilen als auch für den stationären Betrieb bei leichter und gefährdungsfreier Handhabung geeignet sein sowie geringe Kosten für Brenngase und Energie verursachen, wobei sie ohne weiteres auch bei Schnittdicken um 180 mm, unabhängig vom Werkstoff, bei gleichzeitiger Verhinderung des Entstehens nitroser Gase einsetzbar ist.

Hierzu ist nunmehr vorgesehen, daß ein endloser Stahldraht (1) kontinuierlich durch eine Stromkontaktdüse (5) geführt wird und hinter dem Austritt der minusgepolten Stromkontaktdüse (5) zwischen derselben und dem Werkstück (7) als eine von hohem Strom im Niederspannungsbereich durchflossene Elektrode im Lichtbogen abschmilzt, wobei der Lichtbogen von einem ebenfalls aus der Stromkontaktdüse konzentrisch zur Elektrode austretenden Zentralgasstrom (9) und Mantelgasstrom (10) umhüllt und gebündelt wird.

Als Aktivgas für den Zentral- und Mantelgasstrom kann einunddasselbe Medium, vorzugsweise Sauerstoff, verwendet werden.

Verfahren und Vorrichtung zum thermischen Trennen
metallischer Werkstoffe

Die Erfindung betrifft ein Verfahren und die Vorrichtung
zur Durchführung eines Verfahrens zum thermischen
Trennen metallischer Werkstoffe, wobei an die Schnittqualität keine hohen Anforderungen gestellt werden.
Insbesondere ist das Verfahren zur Zerkleinerung von
Schrott geeignet, wobei es unwesentlich ist, ob die
Trennung der Metalle in der Atmosphäre oder unter
Wasser erfolgt.

Für das thermische Trennen metallischer Werkstoffe sind
Schmelzschneidverfahren bekannt, bei denen allgemein im
Lichtbogen das Metall geschmolzen (Eisen, Aluminium,
Kupfer) und durch Zuführung von aktiven oder inaktiven
Gasen der Schmelzfluß aus der Schnittfuge entfernt wird.
So wurde ein Plasmaschneidverfahren beschrieben, bei dem
eine Kathode aus Wolfram oder Zirkon von einem ringförmigen Körper umgeben ist und während des Betriebes durch
den Raum zwischen der Kathode und dem ringförmigen Körper
Luft zugeführt wird.

Dieses einfache Verfahren hat zum Nachteil, daß nur
relativ geringe Materialstärken (hochlegierte Cr- und
Cr-Ni-Stähle bis 40 mm) getrennt werden können, die
Stabkathode aus hochwertigem teueren Material in
kürzester Zeit erodiert und somit die Betriebskosten
negativ beeinflußt werden sowie ein hoher Gefährdungsgrad des Bedienpersonals und der Umwelt durch Bildung
gefährlicher Gase und Rauche sowie durch hohe Spannungen
(400 V) vorhanden ist. Es ist weiterhin bekannt, die
Stabkathode mit zwei ringförmige Körper zu umgeben.
Während des Betriebes wird zwischen dem ersten ringförmigen Körper und der Kathode ein inaktives Gas (z. B. Argon) und im Raum zwischen dem zweiten und dem ersten ringförmigen Körper ein aktives Gas (z. B. Luft) zugeführt (OS 24 34 846). Auch diese Methode beseitigt den Mangel der relativ geringen schneidbaren Materialdicke nicht und die Betriebskosten werden durch den immer noch vorhandenen Kathodenabbrand sowie durch die Verwendung von teurem Argon als inaktives Gas negativ beeinflußt. Ebenfalls ist der Gefährdungsgrad des Bedienpersonals unverändert.

Das weiterhin bekannte Schmelztrennen mit kompakten Stabelektroden oder Hohlelektroden (Sauerstofflichtbogenschneiden) ist aufgrund geringer Wirtschaftlichkeit nur auf Sonderfälle begrenzt. Schließlich sind Verfahren und Vorrichtungen zum Wasserstrahlschneiden bekannt, bei denen mit kontinuierlich abschmelzender Drahtelektrode gearbeitet wird (Schweißtechnik, Berlin 27 (1977) 11, S. 490).
Bei dieser Vorrichtung besteht der Brenner im wesentlichen aus einer Kontaktdüse zur Stromzuführung, die von einer Wasserdüse umgeben ist. Der kreisringförmig um den Elektrodendraht mit verhältnismäßig hohem Druck zur Trennstelle zugeführte Wasserstrahl kühlt den Elektrodendraht, stabilisiert den Lichtbogen und schleudert das geschmolzene Metall aus der Schnittfuge.

Das Anwendungsgebiet dieser Lösung ist wegen des notwendigen apparativen Aufwandes für einen mobilen Einsatz ungeeignet.
Weiterhin wurde eine Vorrichtung zum Schutzgasschweißen und thermischen Trennen mit kontinuierlich abschmelzender Drahtelektrode in der DE-OS 32 09 489 beschrieben. Der thermische Trennvorgang ist in dieser Erfindungsbeschreibung nicht näher erläutert.

Hauptaugenmerk wurde hier auf die Einrichtung zur
Zuführung einer abschmelzenden Drahtelektrode gerichtet.
Ein wesentlicher Nachteil aller bisher beschriebenen
Verfahren und Einrichtungen besteht in den auftretenden
Gefahren für den Schweißer und das Hilfspersonal durch
Leerlaufspannungen, die meist über 100 V liegen müssen,
um die Lebensdauer der Elektroden durch thermische
Beanspruchung wirtschaftlich vertretbar gestalten zu
können.

Hier will die Erfindung Abhilfe schaffen.
Die Erfindung, wie sie in den Ansprüchen gekennzeichnet
ist, löst die Aufgabe, ein Verfahren und eine Vorrichtung
zum thermischen Trennen metallischer Werkstoffe zu entwickeln, das sowohl für den mobilen als auch für den
stationären Betrieb bei leichter und gefährdungsfreier
Handhabung sowie geringen Kosten für Brenngase und
Energie geeignet ist, wobei Schnittdicken um 180 mm,
unabhängig vom Werkstoff, bei gleichzeitiger Verhinderung
des Entstehens nitroser Gase erreichbar sind.

Die durch die Erfindung erreichten Vorteile sind im
wesentlichen darin zu sehen, daß ein endloser Stahldraht,
welcher kontinuierlich durch eine Stromkontaktdüse
geführt wird und hinter dem Austritt der minusgepolten
Stromkontaktdüse zwischen derselben und dem Werkstück
als eine von hohem Strom im Niederspannungsbereich
durchflossene Elektrode im Lichtbogen abschmilzt,
wobei der Lichtbogen von einem ebenfalls aus der
Stromkontaktdüse austretenden Zentralgasstrom und
Mantelgasstrom umhüllt und gebündelt wird, in seiner
Leistungsdichte so erhöht werden kann, daß er schneidend
wirkt. Der mit hoher Geschwindigkeit aus einer gebildeten Ringdüse in der Stromkontaktdüse austretende und
fokussierend wirkende Zentralgasstrom kühlt gleichzeitig
das relativ kurze freie Ende der Elektrode.

Der als Aktivgas verwendete Sauerstoff reagiert nun mit dem hocherhitzten Metall der Elektrode und mit den brennbaren Schmelzbestandteilen des zu trennenden Werkstoffes in der Schnittfuge in einem exothermen Prozeß. Die zusätzliche Wärme verstärkt die Schmelzwirkung des gebündelten Lichtbogens. Die kinetische Energie des Zentralgasstromes unterstützt dabei das Ausblasen von Schmelz- und Verbrennungsprodukten aus der Schnittfuge und Sauerstoff gelangt somit auch an die unteren Bereiche der Schnittfuge.

Der zusätzliche als Ringgasstrom ausgebildete Mantelgasstrom, welcher den Zentralgasstrom umgibt, verhindert den Zutritt von Luft oder anderen Medien in die Schnittfuge bzw. Einwirbelungen in den Lichtbogenbereich, wodurch wiederum das Entstehen von Stickoxiden vermieden wird und die Reinheit des Zentralgases erhalten bleibt.

Da der Zentralgasstrom und der Mantelgasstrom die gleiche chemische Zusammensetzung haben, ist als besonderer Vorteil der Erfindung auch anzusehen, daß beide über eine gemeinsame Zuleitung gespeist werden können.

Die Anwendung eines Ringgasstromes unterstützt den Schmelzschneidprozeß erheblich. Es wurde festgestellt, daß die Schneidleistung bei Wegfall des Ringgasstromes oder bei Gasaustausch des Sauerstoffes durch Gasgemisch wesentlich abfällt.

Nachstehend sollen Verfahren und Vorrichtung an einem Ausführungsbeispiel näher erläutert werden. Dabei zeigen die zugehörigen Zeichnungen:

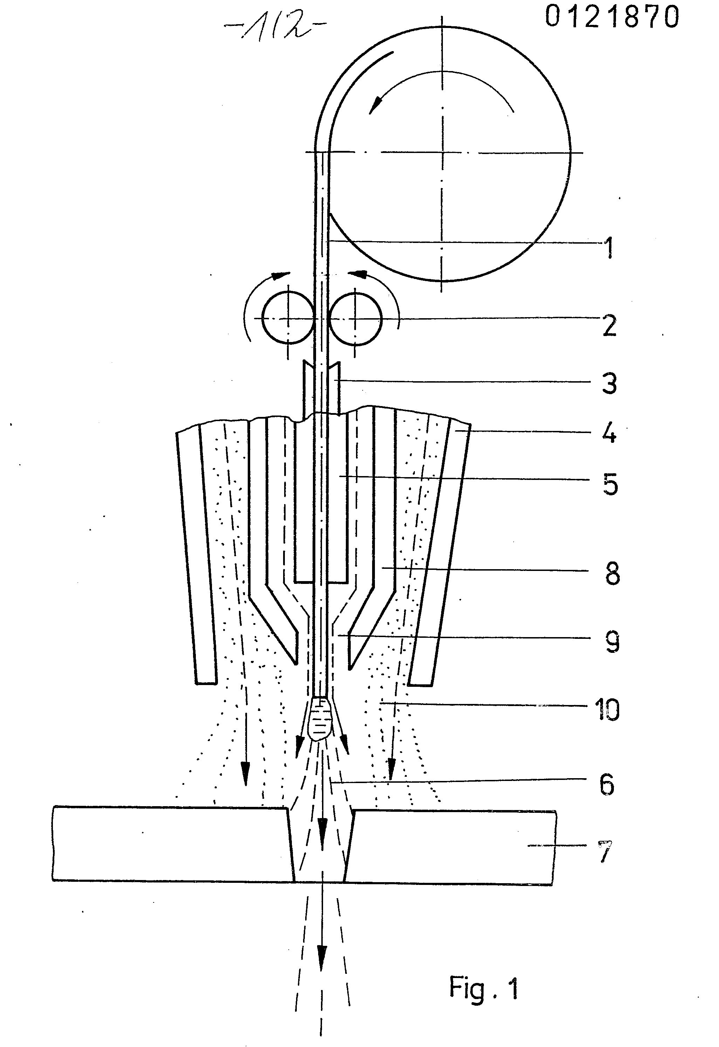

Figur 1 eine prinzipielle Verfahrensdarstellung des erfindungsgemäßen Lichtbogenschmelzschneidens und

Figur 2 eine Vorrichtung zur Durchführung des Verfahrens.

Von einer Drahthaspel wird Stahldraht 1 über einen Vorschubmechanismus 2 und eine Drahtführung 3 durch eine Stromkontaktdüse 5 geführt. Zwischen dem kurzen Elektrodendrahtende hinter der Stromkontaktdüse 5 und dem Werkstück 7 ist ein Lichtbogen 6 angedeutet, der das als Elektrode wirkende Drahtende und das Material in der Schnittfuge abschmilzt. Über die fokussierend wirkende Gasdüse 8 wird als Zentralgasstrom, der den Lichtbogen 6 konzentrisch umgibt, Sauerstoff zugeführt, der als aktives Gas sowohl den Lichtbogen 6 einschnürt und damit die Leistungsdichte erhöht, als auch durch den Abbrand des kontinuierlich zugeführten Drahtes und des Werkstückes 7 die Schneidwirkung verstärkt und schließlich durch die kinetische Energie die Schmelz- und Verbrennungsprodukte aus der Trennfuge fördert. Aus der aus einer äußeren Hülse 4 gebildeten Mantelgasdüse wird der Mantelgasstrom 10 herausgeleitet, der den Zentralgasstrom vor atmosphärischer Luft oder anderen Medien schützt.

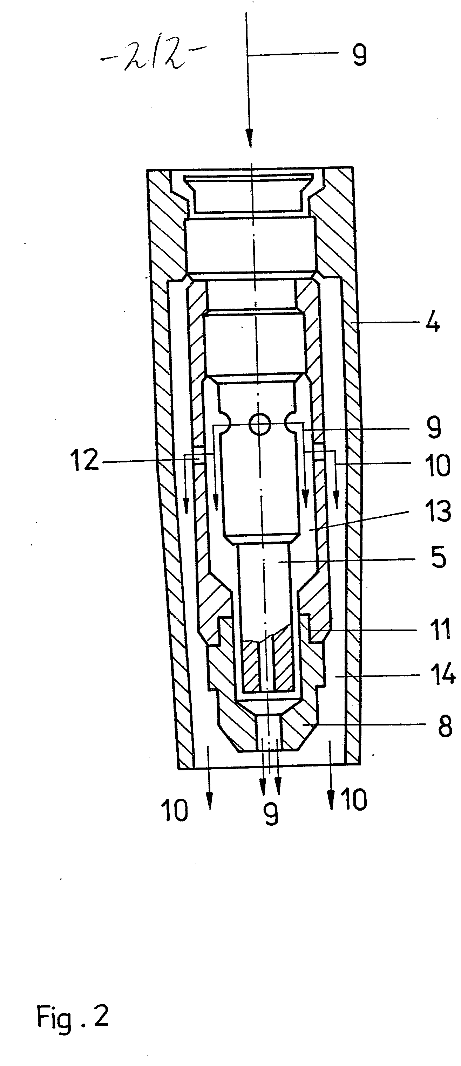

Teile des Mantelgasstromes werden vom Zentralgasstrom mitgerissen und unterstützen dessen exotherme Wirkung. Über eine nicht näher beschriebene Zuleitung wird gemäß Figur 2 das Aktivgas als Zentralgasstrom der Vorrichtung zugeführt. Der Zentralgasstrom 13 ist mit dem Mantelgasraum 14 über Durchbrüche 12 in der Innengashülse 11 verbunden.

Der Gasstrom wird über die Durchbrüche 12 in einen Zentralgasstrom 9 und einen Mantelgasstrom 10 aufgeteilt.

0121870

Eine Querschnittsvergrößerung im Mantelgasstrom bewirkt
eine sofortige Abnahme der Strömungsgeschwindigkeit und
somit ein langsameres Ausströmen des Mantelgasstromes
gegenüber dem fokussierend wirkenden Zentralgasstrom.

Patentansprüche

1. Verfahren zum thermischen Trennen metallischer Werkstoffe mit kontinuierlich zuführbaren Zusatzwerkstoff, gekennzeichnet dadurch, daß ein endloser Stahldraht (1) kontinuierlich durch eine Stromkontaktdüse (5) geführt wird und hinter dem Austritt der minusgepolten Stromkontaktdüse (5) zwischen derselben und dem Werkstück (7) als eine von hohem Strom im Niederspannungsbereich durchflossene Elektrode im Lichtbogen abschmilzt, wobei der Lichtbogen von einem ebenfalls aus der Stromkontaktdüse konzentrisch zur Elektrode austretenden Zentralgasstrom (9) und Mantelgasstrom (10) umhüllt und gebündelt wird.

2. Verfahren nach Anspruch 1, gekennzeichnet dadurch, daß als Zentralgasstrom (9) ein Aktivgas verwendet wird, welches die gleiche chemische Zusammensetzung wie der abschirmend wirkende Mantelgasstrom (10) aufweist.

3. Verfahren nach Anspruch 1 und 2, gekennzeichnet dadurch, daß als Aktivgas vorzugsweise Sauerstoff verwendet wird.

4. Vorrichtung zur Durchführung des Verfahrens nach Anspruch 1 bis 3, gekennzeichnet dadurch, daß der zwischen der Elektrode und der den inneren konzentrischen Düsenaustritt bildenden Innengashülse (11) für den Zentralgasstrom (9) gebildete Strömungsraum über Durchbrüche (12) in der Innengashülse (11) mit dem wiederum konzentrisch angeordneten Strömungsraum für das Mantelgas, welcher durch eine äußere Hülse (4) begrenzt ist, verbunden ist.

-112-

0121870

Fig. 1

-212-

9

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | US-A-2 821 615 (R.L. FANNON) * Vollständiges Dokument * | 1 | B 23 K 9/00 |
| Y | US-A-4 175 984 (B.A. JOHANSSON) * Vollständiges Dokument * | 1 | |
| A | | 3 | |
| A | GB-A- 731 953 (NATIONAL RESEARCH DEVELOPMENT) * Anspruch 1 * | 1 | |
| A | DE-A-2 705 333 (NV PHILIPS' GLOEILAMPENFABRIEKEN) * Fiugur * | 1 | |
| D,A | DE-A-2 434 846 (RIKAGAKU KENKYUSHO) * Ansprüche; Figuren * | 1,3 | |

| RECHERCHIERTE SACHGEBIETE (Int. Cl. 3) |
|---|
| B 23 K 9/00 B 23 K 28/00 |

Der vorliegende Recherchenbericht wurde für alle Patentansprüche erstellt.

| Recherchenort BERLIN | Abschlußdatum der Recherche 30-05-1984 | Prüfer WUNDERLICH J E |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82